# EUROPÄISCHE PATENTSCHRIFT

(11) **EP 2 820 746 B1**
(45) Veröffentlichungstag und Bekanntmachung des Hinweises auf die Patenterteilung: **15.07.2015**
(21) Anmeldenummer: 13711295.9
(22) Anmeldetag: 25.02.2013
(51) Int. Cl.: H02K 15/00, B22D 19/00

(54) **KÄFIGLÄUFER FÜR EINEN KLEINMOTOR UND VERFAHREN ZU SEINER HERSTELLUNG**
SQUIRREL-CAGE ROTOR FOR A SMALL MOTOR AND METHOD FOR THE PRODUCTION THEREOF
INDUIT À CAGE D'ÉCUREUIL POUR MICROMOTEUR ET SON PROCÉDÉ DE FABRICATION

(30) Priorität: 28.02.2012 DE 102012101611
(43) Veröffentlichungstag der Anmeldung: 07.01.2015
(73) Patentinhaber: Alfred Jäger GmbH, 61239 Ober-Mörlen (DE)
(72) Erfinder: JAEGER, Bernd, 61239 Ober-Moerlen (DE)
(74) Vertreter: Haar, Lucas Heinz Jörn
(86) Internationale Anmeldenummer: PCT/EP2013/053659
(87) Internationale Veröffentlichungsnummer: WO 2013/127717

(56) Entgegenhaltungen:
- DE-A1- 19 522 671
- DE-A1-102009 034 647
- JP-A- S5 720 159
- JP-A- H11 299 144
- JP-A- 2003 244 912
- DEUTSCHER VERBAND FÜR SCHWEISSTECHNIK E.V.: "Hartlöten mit Silberlot", DER PRAKTIKER SCHWEISSEN UND SCHNEIDEN, April 1960 (1960-04), XP001460539,

## Beschreibung

Die Erfindung betrifft einen Käfigläufer für einen hochtourigen Kurzschlussläufer-Kleinmotor mit einer in einem Luftlager gelagerten Hohlwelle, die eine zylindrische Bohrung, einen Luftlagerabschnitt und einen an den Luftlagerabschnitt angrenzenden Käfigabschnitt aufweist, und ein Verfahren zu seiner Herstellung.

Kurzschlussläufermotoren haben einen Käfigläufer mit einer Mehrzahl von Leiterstäben, die sich in Axialrichtung erstrecken und in regelmäßigem Abstand voneinander am Umfang des Käfigläufers angeordnet sind. An ihren axialen Enden sind die Leiterstäbe jeweils mit einem Kurzschlussring elektrisch leitend miteinander verbunden. Käfigläufer von für sehr hohe Drehzahlen ausgelegte Kleinmotoren unterliegen wegen der hohen Umfangsgeschwindigkeiten von bis zu 11 000 m/min besonders hohen Festigkeitsanforderungen und werden daher häufig als massive, einstückige Läuferkörper aus niedrig legiertem Stahl mit ferromagnetischen Eigenschaften ausgeführt. Des weiteren werden an die Fertigungsgenauigkeit derartiger Käfigläufer, die für Betriebsdrehzahlen von bis zu 200 000 min⁻¹ bestimmt sind, sehr hohe Anforderungen gestellt, da für die Lagerung der Käfigläufer in der Regel Luftlager verwendet werden, welche sehr kleine Lagerspalte haben und dementsprechend eine sehr hohe Rundlaufgenauigkeit des Läufers erfordern. Durch die hohe Umfangsgeschwindigkeit sind die Leiterstäbe im Betrieb hohen Fliehkräften ausgesetzt und bedürfen daher einer festen Verankerung in dem Käfigläufer. Soll der Käfigläufer als Hohlwelle mit einer Bohrung zur Aufnahme zusätzlicher Bauteile ausgeführt sein, so sind bei der Fertigung besondere Vorkehrungen zu treffen, um Formänderungen, die die angestrebte geometrische Form beeinträchtigen, zu vermeiden.

Das Dokument JP H11 299144 offenbart ein Verfahren zur Herstellung eines Käfigläufers für einen hochtourigen Kurzschlussläufer-Kleinmotor.

Aufgabe der Erfindung ist es, ein Verfahren zur Herstellung eines Käfigläufers der eingangs genannten Art anzugeben, das auf einfache und kostengünstige Weise durchführbar ist und die hohen Anforderungen an die Festigkeit und die Genauigkeit der geometrischen Form des Käfigläufers erfüllt.

Die Aufgabe wird durch das in Patentanspruch 1 angegebene Verfahren gelöst. Vorteilhafte Ausgestaltungen des Verfahrens und ein nach dem Verfahren hergestellter Käfigläufer sind in den weiteren Ansprüchen angegeben.

Das Verfahren nach der Erfindung hat eine Reihe von Vorteilen. Das Ausfüllen der Leiterstabnuten und der Ringaussparungen durch das Einlegen und Abbiegen von Leiterstäben und das anschließende vollständige Ausfüllen der Leiterstabnuten und der Ringaussparungen durch Verlöten der Leiterstäbe ist von Hand und mit einfachen Vorrichtungen durchführbar und erfordert keine aufwendigen und wartungsintensiven Maschinen. Das Verlöten der Leiterstäbe gewährleistet außerdem eine gute Haftung der Leiterstäbe in den Leiterstabnuten durch direkte metallische Verbindung, so dass Maßnahmen, wie hinterschnittenes Nutenprofil, zur Herbeiführung eines Formschlusses entbehrlich sind. Dies vereinfacht die Herstellung der Leiterstabnuten, vorzugsweise mit parallelen Seitenwänden. Das Verankern der umgebogenen Enden der Leiterstäbe in den Ringaussparungen durch diese ausfüllendes Lot gewährleistet weiterhin eine optimale elektrisch leitende Verbindung zwischen den Leiterstäben und den auf diese Weise gebildeten Kurzschlussringen.

Die Leiterstabnuten und die eingelegten Leiterstäbe haben vorzugsweise einen rechteckigen Querschnitt. Dies erleichtert die Montage und das Fixieren der Leiterstäbe vor dem Verlöten. Zudem kann durch Anpassung der Querschnittsabmessungen von Leiterstabnuten und Leiterstäben die zum Verlöten benötigte Lotmenge und der Zeitaufwand für das Löten klein gehalten werden.

Zur Erzielung einer hohen Leitfähigkeit werden vorzugsweise Leiterstäbe aus einer Silberlegierung verwendet, die mit einem Silberlot verlötet werden.

Die Hohlwelle kann einstückig aus einem ferromagnetischen Stahl hergestellt werden.

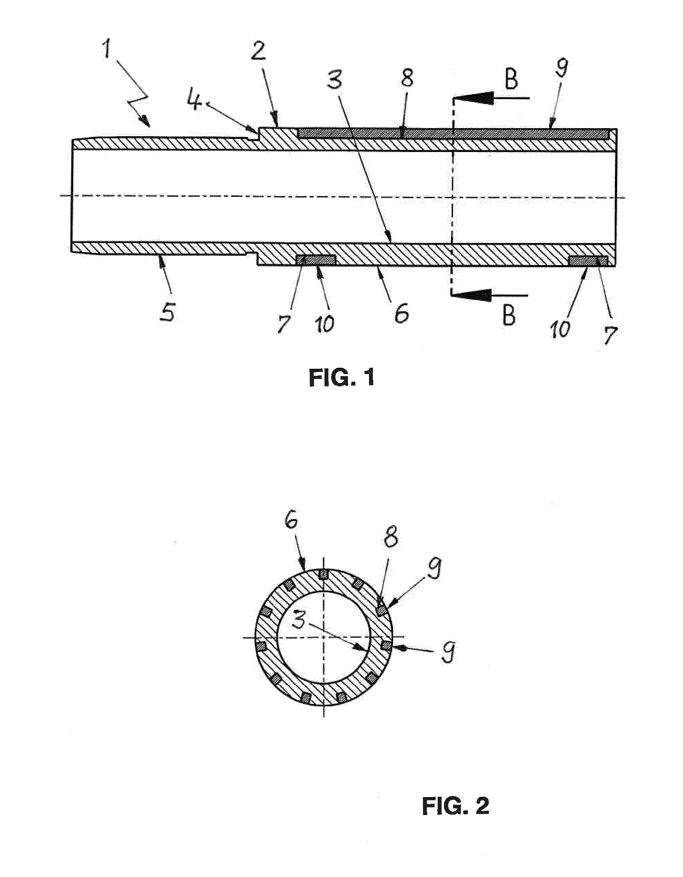

Die Erfindung wird nachfolgend anhand eines Ausführungsbeispiels näher erläutert, das in der Zeichnung dargestellt ist. Es zeigen
- Figur 1: eine Längesschnitt durch einen Käfigläufer, der nach dem erfindungsgemäßen Verfahren hergestellt ist, und
- Figur 2: einen Querschnitt des Käfigläufers gemäß Figur 1 in der Schnittebene B - B.

Der dargestellte Käfigläufer 1 besteht aus einer den Läuferkörper bildenden Hohlwelle 2 mit einer zylindrischen Bohrung 3. Die Außenseite der Hohlwelle 2 ist durch eine radiale Stufe 4 in einen Luftlagerabschnitt 5 und einen Käfigabschnitt 6 unterteilt, die beide zylindrische Mantelflächen haben. Der Luftlagerabschnitt 5 hat einen kleineren Außendurchmesser als der Käfigabschnitt 6. Er dient zur Lagerung des Käfigläufers 1 in einem für sehr hohe Umfangsgeschwindigkeiten ausgelegten Luftlager. Der Käfigabschnitt 6 weist in der Nähe seiner axialen Enden jeweils eine Ringaussparung 7 auf, die einen rechteckigen Querschnitt hat, wobei die axiale Breite der Ringaussparungen 7 größer ist als die radiale Tiefe. Die Ringaussparungen 7 sind durch eine Mehrzahl von zwischen ihnen angeordneten Leiterstabnuten 8 verbunden, die in regelmäßigem Abstand parallel zueinander in dem Käfigabschnitt 6 ausgebildet sind. Die Leiterstabnuten 8 haben einen annähernd quadratischen Querschnitt und ihre Tiefe stimmt mit der Tiefe der Ringaussparungen 7 überein.

Die beschriebene Hohlwelle 2 wird aus einem ferromagnetischen oder weichmagnetischen Stahl mittels mechanischer Bearbeitungsprozesse, wie Drehen, Fräsen und Schleifen, zunächst mit geringem Untermaß im Bereich der Bohrung 3 und Übermaß im Bereich der Mantelflächen des Luftlagerabschnitts 5 und des Käfigabschnitts 6 hergestellt und danach mit den elektrisch leitenden Leiterstäben 9 und Kurzschlussringen 10 auf folgende Weise versehen:

Die Hohlwelle 2 wird in ihrer Bohrung 3 in einer Spannvorrichtung horizontal so aufgenommen, dass eine Leiterstabnut 8 oben liegt. In diese wird dann ein Leiterstab 9 mit quadratischem Profil eingelegt, dessen Enden bis in die Ringaussparungen 7 hineinragen, wo sie ab- oder umgebogen werden. Mittels eines Stempels, dessen Durchmesser etwas größer ist als die Breite der Leiterstabnut 8, wird dann an mehreren voneinander entfernten Stellen der Rand der Leiterstabnut 8 von oben eingedrückt und dadurch der eingelegte Leiterstab 9 in der Leiterstabnut 8 fixiert. Der beschriebene Vorgang wird nacheinander bei allen Leiterstabnuten 8 wiederholt, wobei die Hohlwelle 2 jeweils schrittweise um den Teilungsabstand der Leiterstabnuten 8 gedreht wird, bis in allen Leiterstabnuten 8 Leiterstäbe 9 eingelegt und fixiert sind.

In einem nächsten Bearbeitungsschritt wird die mit Leiterstäben 9 versehene Hohlwelle 2 in einer Lötvorrichtung aufgenommen, und durch Erwärmen und Zuführen von Lot sowie geeignetem Flussmittel werden die Leiterstäbe 9 durch Löten vollflächig mit der Hohlwelle 2 verbunden. Gleichzeitig werden durch Verlöten der Enden der Leiterstäbe 9 und das Ausfüllen vorhandener Lücken die Ringaussparungen 7 vollständig mit Lot ausgefüllt und die Kurzschlussringe 10 gebildet. Als Lot wird bei diesem Vorgang Silberlot verwendet, um die thermische Belastung der Hohlwelle 2 durch das Löten zu begrenzen. Die Leiterstäbe 9 bestehen aus Gründen der guten Leitfähigkeit aus einer Silberlegierung und lassen sich daher mit Silberlot gut verlöten.

Nach dem Einlöten der Leiterstäbe 9 wird die Bohrung der Hohlwelle 2 mechanisch bearbeitet und auf Endmaß gehont. Bei den vorangegangenen Verfahrensschritten eventuell eingetretene, geringe Formänderungen der Bohrung 3 werden hierdurch beseitigt, so dass die Bohrung 3 die Bezugsfläche für die weitere genaue Bearbeitung bilden kann. Die Hohlwelle 2 wird dann in der Bohrung 3 von einem Werkzeugdorn aufgenommen und gespannt, und durch mechanisches Bearbeiten und Feinschleifen werden die Mantelflächen des Luftlagerabschnitts 5 und des Käfigabschnitts 6 einschließlich der Außenflächen der Leiterstäbe 9 und der Kurzschlussringe 10 in eine ununterbrochene zylindrische Form und auf ein genaues Endmaß gebracht. Auf diese Weise wird ein in einem Luftlager zu lagernder Käfigläufer geschaffen, der sich durch hohe Formgenauigkeit und Rundlaufgenauigkeit auszeichnet und für sehr hohe Antriebsdrehzahlen von über 100 000 min⁻¹ geeignet ist.

Das beschriebene Herstellverfahren eignet sich insbesondere zur Herstellung von Käfigläufern, die einen kleinen Außendurchmesser von z.B. unter 20 mm und im Bereich des Käfigabschnitts eine Wandstärke von nur wenigen Millimetern haben. Die Metallverbindung zwischen der Hohlwelle und den Leiterstäben gewährleistet eine zuverlässige Verankerung der Leiterstäbe, die den hohen Fliehkraftbeanspruchungen standhält. Sie sorgt weiterhin für einen guten Wärmeübergang zwischen Hohlwelle und Leiterstäben, so dass die thermische Beanspruchung des Käfigläufers durch geeignete Kühlmaßnahmen gut beherrschbar ist. Maßgebend für die guten, dynamischen Eigenschaften des Käfigläufers ist weiterhin die durch Feinschleifen erzielte und rundlaufgenaue Mantelfläche im Bereich des Käfigabschnitts, so dass enge Luftspalte gegenüber dem Stator erreichbar sind. Schließlich ist das Herstellverfahren einfach und kostengünstig durchführbar und erfordert keine komplizierten Maschinen und Anlagen.

## Patentansprüche

1. Verfahren zur Herstellung eines Käfigläufers (1) für einen hochtourigen Kurzschlussläufer-Kleinmotor mit einer in einem Luftlager gelagerten Hohlwelle, umfassend die Schritte:
Bereitstellen einer Hohlwelle (2) mit einer zylindrischen Bohrung (3), einem Luftlagerabschnitt (5) und einem an den Luftlagerabschnitt (5) angrenzenden Käfigabschnitt (6) mit jeweils zylindrischen Mantelflächen, wobei die Bohrung (3), der Luftlagerabschnitt (5) und der Käfigabschnitt (6) eine Materialzugabe zur Nachbearbeitung aufweisen,
Fertigen von Ringaussparungen (7) an den Enden des Käfigabschnitts (6) und nach außen offenen Leiterstabnuten (8), die in die Ringaussparungen (7) münden,
Einlegen von Leiterstäben (9) in die Leiterstabnuten (8) und Abbiegen der Leiterstabenden derart, dass die abgebogenen Enden in den Ringaussparungen (7) einliegen,
Fixieren der Leiterstäbe (9) in den Leiterstabnuten (8) durch örtliches Einprägen der Ränder der Leiterstabnuten (8) an mehreren Stellen,
vollständiges Ausfüllen der Leiterstabnuten (8) und der Ringaussparungen (7) durch Einbringen von Lot und Verlöten der Leiterstäbe (9) mit der Hohlwelle (2),
mechanisches Bearbeiten der Bohrung (3) der Hohlwelle (2) und Honen auf Endmaß,
Aufnehmen und Spannen der Hohlwelle (2) in der Bohrung (3) mit einem Werkzeugdorn, mechanisches Bearbeiten und Feinschleifen der zylindrischen Mantelflächen des Luftlagerabschnitts (5) und des Käfigabschnitts (6) auf Endmaß.

2. Verfahren nach Anspruch 1, **dadurch gekennzeichnet, dass** die Leiterstabnuten (8) und die Leiterstäbe (9) einen rechteckigen Querschnitt haben.

3. Verfahren nach einem der Ansprüche 1 oder 2, **dadurch gekennzeichnet, dass** die Leiterstäbe (9) aus einer Silberlegierung bestehen und als Lot ein Silberlot verwendet wird.

4. Verfahren nach einem der vorhergehenden Ansprüche, **dadurch gekennzeichnet, dass** die Hohlwelle (2) aus einem ferromagnetischen Stahl hergestellt ist.

5. Käfigläufer (1) für einen hochtourigen Kurzschlussläufer-Kleinmotor, mit einer Hohlwelle (2), die eine zylindrische Bohrung (3), einen Luftlagerabschnitt (5) und einen an den Luftlagerabschnitt (5) angrenzenden Käfigabschnitt (6) aufweist, die jeweils eine zylindrische Mantelfläche haben, wobei der Käfigabschnitt (6) an den Enden mit Kurzschlussringen (10) ausgefüllte Ringaussparungen (7) und zwischen diesen nach außen offene, mit Leiterstäben (9) ausgefüllte Leiterstabnuten (8) hat, die in die Ringaussparungen (7) münden, wobei der Käfigläufer (1) nach einem in den vorhergehenden Ansprüchen angegebenen Verfahren hergestellt ist.

6. Käfigläufer nach dem vorhergehenden Anspruch, **dadurch gekennzeichnet, dass** die Ringaussparungen (7) und die Leiterstabnuten (8) rechteckig sind.

7. Käfigläufer nach einem der Ansprüche 5 oder 6, **dadurch gekennzeichnet, dass** die Ringaussparungen (7) die gleiche Tiefe haben wie die Leiterstabnuten (8) und dass ihre axiale Breite größer ist als ihre Tiefe.

## Claims

1. A method of manufacturing a squirrel-cage rotor (1) for a high-speed small-power squirrel-cage induction motor having a hollow shaft carried in an air bearing, comprising the steps of:
providing a hollow shaft (2) with a cylindrical bore (3), an air-bearing portion (5) and a squirrel-cage portion (6) adjoining the air-bearing portion (5), each having cylindrical envelope surfaces, with the bore (3), the air-bearing portion (5) and the squirrel-cage portion (6) having an allowance for post-machining,
producing annular recesses (7) at the ends of the squirrel-cage portion (6) and outwardly open conductive-bar grooves (8) terminating in the annular recesses (7),
inserting conductive bars (9) into the conductive-bar grooves (8) and bending the ends of the conductive bars such that the bent ends are embedded in the annular recesses (7),
fixing the conductive bars (9) in the conductive-bar grooves (8) by locally embossing the edges of the conductive-bar grooves (8) at several sites,
completely filling the conductive-bar grooves (8) and the annular recesses (7) by introducing braze or solder and brazing or soldering the conductive bars (9) to the hollow shaft (2),
machining the bore (3) of the hollow shaft (2) and honing to final dimension,
locating and clamping the hollow shaft (2) in the bore (3) using a mandrel,
machining and finish-grinding the cylindrical envelope surfaces of the air-bearing portion (5) and the squirrel-cage portion (6) to final dimensions.

2. The method according to claim 1, **characterized in that** the conductive-bar grooves (8) and the conductive bars (9) are rectangular in cross-section.

3. The method according to any one of the claims 1 or 2, **characterized in that** the conductive bars (9) are made of a silver alloy and that silver braze or silver solder is used as filler material.

4. The method according to any one of the preceding claims, **characterized in that** the hollow shaft (2) is made of a ferromagnetic steel material.

5. A squirrel-cage rotor (1) for a high-speed small-power squirrel-cage induction motor, with a hollow shaft (2) having a cylindrical bore (3), an air-bearing portion (5) and a squirrel-cage portion (6) adjoining the air-bearing portion (5), each having a cylindrical envelope surface, the squirrel-cage portion (6) having at its ends annular recesses (7) filled with shorting rings (10), and between said ends outwardly open conductive-bar grooves (8) filled with conductive bars (9) terminating in the annular recesses (7), wherein the squirrel-cage rotor (1) is manufactured according a method recited in the preceding claims.

6. The squirrel-cage rotor according to the preceding claim, **characterized in that** the annular recesses (7) and the conductive-bar grooves (8) are rectangular.

7. The squirrel-cage rotor according to any one of the claims 5 or 6, **characterized in that** the annular recesses (7) have the same depth as the conductive-bar grooves (8) and that their axial width is greater than their depth.

## Revendications

1. Procédé pour la fabrication d'un rotor à cage d'écureuil (1) pour un mini-moteur à rotor en court-circuit tournant à grande vitesse avec un arbre creux logé dans un palier à coussin d'air, comprenant les étapes suivantes :
préparation d'un arbre creux (2) avec un alésage cylindrique (3), un segment de palier à coussin d'air (5) et un segment de cage (6) adjacent au segment de palier à coussin d'air (5) ayant chacun une surface d'enveloppe cylindrique, l'alésage (3), le segment de palier à coussin d'air (5) et le segment de cage (6) comprenant un ajout de matière en vue d'un réusinage,
réalisation d'évidements annulaires (7) aux extrémités du segment de cage (6) et de gorges (8) pour barres conductrices ouvertes vers l'extérieur et qui débouchent dans les évidements annulaires (7),
mise en place de barres conductrices (9) dans les gorges (8) pour barres conductrices et cintrage des extrémités des barres conductrices de telle sorte que les extrémités cintrées soient logées dans les évidements annulaires (7),
fixation des barres conductrices (9) dans les gorges (8) pour barres conductrices par estampage en plusieurs points des bords des gorges (8) pour barres conductrices,
remplissage complet des gorges (8) pour barres conductrices et des évidements annulaires (7) par apport de métal d'apport de brasage et brasage des barres conductrices (9) à l'arbre creux (2),
usinage mécanique de l'alésage (3) de l'arbre creux (2) et honage aux dimensions finales mise en place et serrage de l'arbre creux (2) dans l'alésage (3) à l'aide d'un mandrin d'outil, usinage mécanique et rodage aux dimension finales des enveloppes cylindriques du segment de palier à coussin d'air (5) et du segment de cage (6).

2. Procédé selon la revendication 1, **caractérisé en ce que** les gorges (8) pour barres conductrices et les barres conductrices (9) présentent une section transversale rectangulaire.

3. Procédé selon l'une des revendications 1 ou 2, **caractérisé en ce que** les barres conductrices (9) sont réalisées dans un alliage d'argent et de l'argent d'apport de brasage est utilisé comme métal d'apport pour brasage.

4. Procédé selon l'une des revendications précédentes, **caractérisé en ce que** l'arbre creux (2) est fabriqué dans un acier ferromagnétique.

5. Rotor à cage d'écureuil (1) pour un mini-moteur à rotor en court-circuit tournant à grande vitesse, muni d'un arbre creux (2) présentant un alésage cylindrique (3), d'un segment de palier à coussin d'air (5) et d'un segment de cage (6) adjacent au segment de palier à coussin d'air (5), lesquels présentent chacun une surface d'enveloppe cylindrique, le segment de cage (6) ayant aux extrémités des évidements annulaires (7) remplis par des anneaux de court-circuit (10) et entre ceux-ci des gorges (8) pour barres conductrices débouchant dans les évidements annulaires (7), ouvertes vers l'extérieur et remplies avec des barres conductrices (9), le rotor à cage d'écureuil (1) étant réalisé conformément à un procédé selon l'une des revendications précédentes.

6. Rotor à cage d'écureuil selon la revendication précédente, **caractérisé en ce que** les évidements annulaires (7) et les gorges (8) pour barres conductrices sont rectangulaires.

7. Rotor à cage d'écureuil selon la revendication 5 ou 6, **caractérisé en ce que** les évidements annulaires (7) ont la même profondeur que les gorges (8) pour barres conductrices, et **en ce que** leur largeur axiale est supérieure à leur profondeur.
